# EUROPEAN PATENT APPLICATION

(11) **EP 4 790 935 A1**
(43) Date of publication of application: **12.08.2026**
(21) Application number: 24884579.4
(22) Date of filing: 24.10.2024
(51) Int. Cl.: H04L 5/00, H04W 52/02

(54) **TRANSMISSION METHOD AND APPARATUS**

(30) Priority: 31.10.2023 CN 202311441023
(71) Applicant: HUAWEI TECHNOLOGIES CO., LTD., Shenzhen 518129 (CN)
(72) Inventor: JIAO, Minghan, Shenzhen, Guangdong 518129 (CN); CHEN, Liangyu, Shenzhen, Guangdong 518129 (CN); LI, Ruijie, Shenzhen, Guangdong 518129 (CN); MADIER, Louis, Shenzhen, Guangdong 518129 (CN)
(74) Representative: MERH-IP Matias Erny Reichl Hoffmann Patentanwälte PartG mbB
(86) International application number: PCT/CN2024/127171
(87) International publication number: WO 2025/092575

(57) **Abstract**

A transmission method and an apparatus are provided, and relate to the field of wireless communication technologies. In the method, a network apparatus sends first indication information to a terminal apparatus, and the terminal apparatus activates, based on the first indication information, a configuration of not transmitting a first uplink channel in a first cell within a first time period, where the first uplink channel includes a first CG PUSCH; and the terminal apparatus sends first uplink information on a first CG PUSCH resource, where the first CG PUSCH resource is within the first time period.

## Description

### CROSS-REFERENCE TO RELATED APPLICATIONS

This application claims priority to Chinese Patent Application No. 202311441023.1, filed with the China National Intellectual Property Administration on October 31, 2023 and entitled "TRANSMISSION METHOD AND APPARATUS", which is incorporated herein by reference in its entirety.

### TECHNICAL FIELD

This application relates to the field of wireless communication technologies, and in particular, to a transmission method and an apparatus.

### BACKGROUND

With continuous evolution of cellular communication technologies, a network transmission bandwidth continuously increases, and an increase of a peak to average power ratio (peak to average power ratio, PAPR) gradually reduces efficiency of a power amplifier (power amplifier, PA), resulting in an increase of transmit power consumption of a network device. A rapid increase of transmission channels leads to an increase of static power consumption of a system. To reduce system power consumption, the network device may configure a terminal to activate cell discontinuous reception (cell discontinuous reception, cell DRX), so that the terminal may not transmit some channels within an inactive time period of the cell DRX.

To satisfy a service requirement, the NR protocol introduces a configured grant physical uplink shared channel of an augmented reality service XR, which is referred to as an XR configured grant physical uplink shared channel (configured grant PUSCH, CG PUSCH). The XR CG PUSCH is used to transmit a service with a requirement of a high priority and a low latency.

However, if the terminal activates the cell DRX, how to send the XR CG PUSCH within an inactive time period of a cell DRX cycle is a problem that needs to be resolved currently.

### SUMMARY

Embodiments of this application provide a transmission method and an apparatus, to address how to send a first CG PUSCH within an inactive time period of a transmission configuration cycle.

A communication system to which embodiments of this application are applicable includes a network apparatus and a terminal apparatus. The network apparatus may activate a transmission configuration, for example, a cell DRX transmission configuration, on the terminal apparatus by using first indication information. When performing an XR service, the terminal apparatus may determine whether to transmit, within a first time period (an inactive time period) indicated by the transmission configuration, a first CG PUSCH used to carry the XR service, and may send uplink information to the network apparatus, to indicate a transmission state of a CG PUSCH resource.

The following describes embodiments of this application.

According to a first aspect, a transmission method is provided. The method may be applied to a terminal apparatus. The method may include: The terminal apparatus receives first indication information, where the first indication information is used to activate a configuration of not transmitting a first uplink channel in a first cell within a first time period, where the first uplink channel includes a CG PUSCH; and the terminal apparatus sends first uplink information on a first CG PUSCH resource of the first cell, where the first CG PUSCH resource is within the first time period.

In a possible implementation, that the first indication information is used to activate the configuration of not transmitting the first uplink channel in the first cell within the first time period is alternatively described as follows: The first indication information is used to activate a discontinuous reception configuration of the first cell, and the discontinuous reception configuration of the first cell includes not transmitting the first uplink channel in the first cell within the first time period of a first cycle.

Optionally, the first uplink information indicates transmission states of N CG PUSCH resources, and time domain positions of the N CG resources are after a time domain position of the first CG PUSCH resource, where N is a positive integer greater than 1.

Optionally, the method further includes: The terminal apparatus sends the first CG PUSCH on the first CG PUSCH resource of the first cell.

In the foregoing implementation, a problem of how to transmit the first CG PUSCH on a CG PUSCH resource within the first time period is resolved, and how to indicate a CG PUSCH resource within an inactive time period by UTO-UCI is specified. For an XR service, in this embodiment of this application, XR CG PUSCH transmission may be performed on an XR CG PUSCH resource within an inactive time period of a cell DRX cycle. Therefore, a requirement of a high priority and a low latency of the XR service may be satisfied.

In a possible implementation, before the sending the first uplink information on the first CG PUSCH resource of the first cell, the method further includes: sending second uplink information on a second CG PUSCH resource of the first cell, where the second uplink information indicates a transmission state of the first CG PUSCH resource, and the transmission state of the first CG PUSCH resource is "transmit". In this manner, if the second uplink information indicates that the transmission state of the first CG PUSCH resource is "transmit", even if the first CG PUSCH resource is within the first time period, the terminal may transmit information on the first CG PUSCH resource.

In a possible implementation, the second uplink information may be alternatively described as indication information of the transmission state of the CG PUSCH.

Further, the transmission state of the CG PUSCH resource is indicated by the second uplink information. For a receive end, the receive end may learn of CG PUSCH resources on which CG PUSCH transmission is performed and CG PUSCH resources on which no CG PUSCH transmission is performed, and the receive end may not receive the CG PUSCH resources on which no CG PUSCH transmission is performed, to reduce power consumption of the receive end. For example, the receive end is a base station, and this manner is conducive to energy saving of the base station.

In a possible implementation, the second uplink information is UTO-UCI. The transmission state of the first CG PUSCH resource is indicated by the UTO-UCI.

In a possible implementation, the first CG PUSCH resource belongs to a first CG period, the first CG period further includes a third CG PUSCH resource, and the third CG PUSCH resource is not within the first time period. This manner may be alternatively described as follows: If in one CG period, some CG PUSCH resources are within the first time period, and other CG PUSCH resources are outside the first time period, a transmission state of the CG PUSCH within the first time period is that a corresponding data service (for example, an XR service) can be transmitted.

In a possible implementation, the method further includes: determining that the first CG PUSCH is not transmitted on a fourth CG PUSCH resource, where the fourth CG PUSCH resource belongs to a second CG period, and all CG PUSCH resources in the second CG period are within the first time period. This manner may be alternatively described as follows: If all CG PUSCH resources in one CG period are within the first time period, a transmission state of the CG PUSCH within the first time period is that a corresponding data service (for example, an XR service) is not transmitted.

In a possible implementation, the method further includes: sending third uplink information on a fifth CG PUSCH resource of the first cell, where the third uplink information indicates a transmission state of the fourth CG PUSCH resource, and the transmission state of the fourth CG PUSCH resource is "not transmit".

In a possible implementation, the first time period includes a fourth CG PUSCH resource, the fourth PUSCH resource belongs to a second CG period, and all CG PUSCH resources in the second CG period are within the first time period. In this manner, if all CG PUSCH resources in one CG period are within the first time period, service information is not transmitted on any one of the CG PUSCH resources in the CG.

In a possible implementation, the method further includes: when determining third uplink information, determining the fourth CG PUSCH resource in the second CG period as an invalid resource.

In a possible implementation, the third uplink information does not indicate a transmission state of a CG PUSCH resource determined as an invalid resource. In this manner, the third uplink information indicates a transmission state of a valid resource, and does not need to indicate a transmission state of the invalid resource, so that resources used by the terminal to send the third uplink information can be reduced.

In a possible implementation, the first indication information is used to activate a discontinuous reception configuration of the first cell, the discontinuous reception configuration of the first cell includes not transmitting the first uplink channel in the first cell within the first time period of a first cycle, and the first uplink channel includes the first CG PUSCH.

According to a second aspect, a transmission method is provided. The method may be applied to a network apparatus. The method may include: The network apparatus sends first indication information, where the first indication information is used to activate a configuration of not transmitting a first uplink channel in a first cell within a first time period, where the first uplink channel includes a first CG PUSCH; and the network apparatus receives first uplink information on a first CG PUSCH resource of the first cell, where the first CG PUSCH resource is within the first time period.

In a possible implementation, before the receiving the first uplink information on the first CG PUSCH resource of the first cell, the method further includes: receiving second uplink information on a second CG PUSCH resource of the first cell, where the second uplink information indicates a transmission state of the first CG PUSCH resource, and the transmission state of the first CG PUSCH resource is "transmit".

In a possible implementation, the first CG PUSCH resource belongs to a first CG period, the first CG period further includes a third CG PUSCH resource, and the third CG PUSCH resource is not within the first time period.

In a possible implementation, the method further includes: receiving third uplink information on a fifth CG PUSCH resource of the first cell, where the third uplink information indicates a transmission state of a fourth CG PUSCH resource, the transmission state of the fourth CG PUSCH resource is "not transmit", the fourth CG PUSCH resource belongs to a second CG period, and all CG PUSCH resources in the second CG period are within the first time period.

In a possible implementation, the first indication information is used to activate a cell discontinuous reception configuration, the cell discontinuous reception configuration includes not transmitting the first uplink channel in the first cell within the first time period of a first cycle, and the first uplink channel includes the first CG PUSCH.

According to a third aspect, a transmission method is provided. The method is applied to a terminal apparatus. The method includes: The terminal apparatus receives first indication information, where the first indication information is used to activate a configuration of not transmitting a first uplink channel in a first cell within a first time period, where the first uplink channel includes a first CG PUSCH; and the terminal apparatus sends first uplink information on a first CG PUSCH resource of the first cell, where the first uplink information indicates a transmission state of a second CG PUSCH resource, the transmission state of the second CG PUSCH is "not transmit", and the second CG PUSCH resource is within the first time period.

In a possible implementation, the second CG PUSCH resource belongs to a first CG period, the first CG period further includes a third CG PUSCH resource, and the third CG PUSCH resource is not within the first time period; and the method further includes: determining that the transmission state of the second CG PUSCH resource is "not transmit".

In a possible implementation, the method further includes: determining that a transmission state of the third CG PUSCH resource is "not transmit".

In a possible implementation, the first uplink information further indicates the transmission state of the third CG PUSCH resource, and the transmission state of the third CG PUSCH is "not transmit".

In a possible implementation, that the first indication information is used to activate the configuration of not transmitting the first uplink channel in the first cell within the first time period is alternatively described as follows: The first indication information is used to activate a cell discontinuous reception configuration, the cell discontinuous reception configuration includes not transmitting the first uplink channel in the first cell within the first time period of a first cycle, and the first uplink channel includes the first CG PUSCH.

According to a fourth aspect, a transmission method is provided. The method is applied to a network apparatus. The method includes: The network apparatus sends first indication information, where the first indication information is used to activate a configuration of not transmitting a first uplink channel in a first cell within a first time period, where the first uplink channel includes a first CG PUSCH; and the network apparatus receives first uplink information on a first CG PUSCH resource of the first cell, where the first uplink information indicates a transmission state of a second CG PUSCH resource, the transmission state of the second CG PUSCH is "not transmit", and the second CG PUSCH resource is within the first time period.

In a possible implementation, that the first indication information is used to activate the configuration of not transmitting the first uplink channel in the first cell within the first time period is alternatively described as follows: The first indication information is used to activate a discontinuous reception configuration of the first cell, the discontinuous reception configuration of the first cell includes not transmitting the first uplink channel in the first cell within the first time period of a first cycle, and the first uplink channel includes the first CG PUSCH.

In a possible implementation, the second CG PUSCH resource belongs to a first CG period, the first CG period further includes a third PUSCH resource, and the third CG PUSCH resource is not within the first time period; and the method further includes: determining that the second CG PUSCH resource and/or the third CG PUSCH resource are/is not used for CG PUSCH transmission.

In a possible implementation, the first uplink information further indicates a transmission state of the third CG PUSCH resource, and the transmission state of the third CG PUSCH is "not transmit".

According to a fifth aspect, a transmission method is provided. The method is applied to a terminal apparatus. The method includes: The terminal apparatus receives first indication information, where the first indication information is used to activate a configuration of not transmitting a first uplink channel in a first cell within a first time period, where the first uplink channel includes a first CG PUSCH; and when determining first uplink information sent on a first CG PUSCH resource, the terminal apparatus determines a second CG PUSCH resource as an invalid resource, where the second CG PUSCH resource is within the first time period, the second CG PUSCH resource belongs to a first CG period, the first CG period further includes a third CG PUSCH resource, and the third PUSCH resource is not within the first time period.

In a possible implementation, the second CG PUSCH resource belongs to the first CG period, the first CG period further includes the third CG PUSCH resource, and the third PUSCH resource is not within the first time period; and the method further includes: when determining the first uplink information sent on the first CG PUSCH resource, determining the third CG PUSCH resource as an invalid resource.

In a possible implementation, the first indication information is used to activate a cell discontinuous reception configuration, the cell discontinuous reception configuration includes not transmitting the first uplink channel in the first cell within the first time period of a first cycle, and the first uplink channel includes the first CG PUSCH; and after the receiving the first indication information, the method further includes: activating the cell discontinuous reception configuration.

According to a sixth aspect, a transmission method is provided. The method may be applied to a terminal apparatus. The method includes: The terminal apparatus receives first indication information, where the first indication information is used to activate a configuration of not transmitting a first uplink channel in a first cell within a first time period, and the first uplink channel does not include a first CG PUSCH; and the terminal apparatus sends first uplink information on a first CG PUSCH resource of the first cell.

In a possible implementation, the first indication information is used to activate a cell discontinuous reception configuration, the cell discontinuous reception configuration includes not transmitting the first uplink channel in the first cell within the first time period of a first cycle, and the first uplink channel includes the first CG PUSCH.

According to a seventh aspect, a transmission method is provided. The method may be applied to a network apparatus. The method includes: The network apparatus sends first indication information, where the first indication information is used to activate a configuration of not transmitting a first uplink channel in a first cell within a first time period, where the first uplink channel does not include a first CG PUSCH; and the network apparatus receives first uplink information on a first CG PUSCH resource of the first cell.

In a possible implementation, the first indication information is used to activate a cell discontinuous reception configuration, the cell discontinuous reception configuration includes not transmitting the first uplink channel in the first cell within the first time period of a first cycle, and the first uplink channel includes the first CG PUSCH.

According to an eighth aspect, a communication apparatus is provided. The communication apparatus includes units or modules configured to perform the method according to any one of the first aspect to the seventh aspect.

According to a ninth aspect, a communication apparatus is provided. The communication apparatus includes one or more processors configured to perform the method according to any one of the first aspect to the seventh aspect.

According to a tenth aspect, a computer-readable storage medium is provided. The computer-readable storage medium stores a computer program or instructions, and when the computer program or the instructions are executed by a communication apparatus, the method according to any one of the first aspect to the seventh aspect is implemented.

According to an eleventh aspect, a chip system is provided, including: a memory, configured to store a computer program; and a processor, where after the processor invokes the computer program from the memory and runs the computer program, a communication apparatus in which the chip system is installed is caused to perform the method according to any one of the first aspect to the seventh aspect.

According to a twelfth aspect, a computer program product is provided. When the computer program product is invoked by a computer, the computer is caused to perform the method according to any one of the first aspect to the seventh aspect.

### BRIEF DESCRIPTION OF DRAWINGS

FIG. 1 is a diagram of an architecture of a communication system to which an embodiment of this application is applicable;
FIG. 2 is a diagram of active time and inactive time of a cell DRX cycle according to an embodiment of this application;
FIG. 3 is a diagram of reporting UTO-UCI according to an embodiment of this application;
FIG. 4 is a schematic flowchart of a transmission method according to an embodiment of this application;
FIG. 5a is a diagram of a first CG PUSCH resource and a second CG PUSCH resource according to an embodiment of this application;
FIG. 5b is a diagram of an example of transmitting a CG PUSCH on a CG PUSCH resource within a first time period according to an embodiment of this application;
FIG. 6a is a diagram of another first CG PUSCH resource and another second CG PUSCH resource according to an embodiment of this application;
FIG. 6b is a diagram of another example of transmitting a CG PUSCH within a first time period according to an embodiment of this application;
FIG. 7 is a diagram of transmitting a CG PUSCH on all CG PUSCH resources in a first CG period according to an embodiment of this application;
FIG. 8 is a diagram of not transmitting a CG PUSCH on any one of all CG PUSCH resources in a second CG period within a first time period according to an embodiment of this application;
FIG. 9 is a diagram of not transmitting a CG PUSCH on any one of all CG PUSCH resources in a second CG period within a first time period, and determining the CG PUSCH resource as an invalid resource according to an embodiment of this application;
FIG. 10 is a schematic flowchart of another transmission method according to an embodiment of this application;
FIG. 11a is a diagram of setting a transmission state of a CG PUSCH resource in a CG period to "not transmit" according to an embodiment of this application;
FIG. 11b is a diagram of determining a CG PUSCH resource in a CG period as an invalid resource according to an embodiment of this application;
FIG. 12 is a schematic flowchart of another transmission method according to an embodiment of this application;
FIG. 13 is a diagram of a structure of a communication apparatus according to an embodiment of this application; and
FIG. 14 is a diagram of a structure of a communication apparatus according to another embodiment of this application.

### DESCRIPTION OF EMBODIMENTS

Embodiments of this application may be applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, and a 5th generation (5th generation, 5G) system or new radio (new radio, NR), or be applied to a future communication system, another similar communication system, or the like.

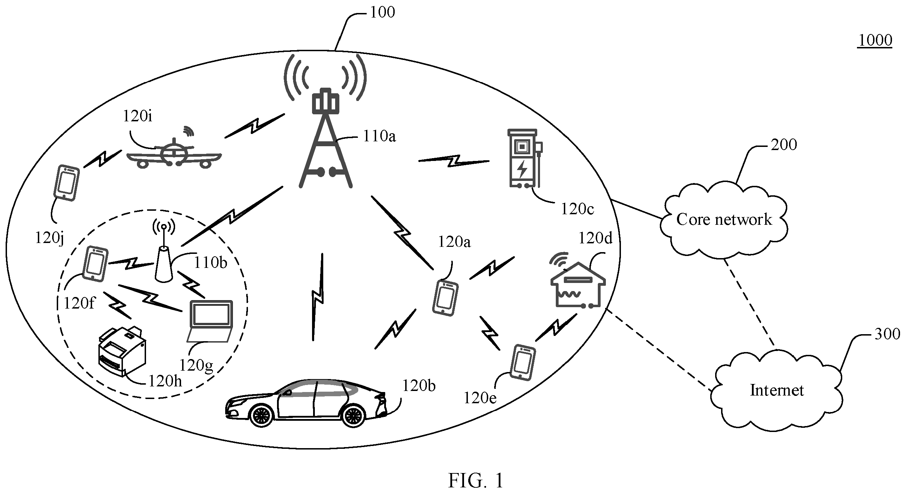

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely a diagram. The communication system may further include another network device, for example, may further include a wireless relay device and a wireless backhaul device, which are not drawn in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes a part of functions of a base station, for example, may be a central unit (central unit, CU), or may be a distributed unit (distributed unit, DU). The CU herein performs functions of a radio resource control protocol and a packet data convergence protocol (packet data convergence protocol, PDCP) of the base station, and may further perform functions of a service data adaptation protocol (service data adaptation protocol, SDAP). The DU performs functions of a radio link control layer and a medium access control (medium access control, MAC) layer of the base station, and may further perform some or all functions of a physical layer. For specific descriptions of the foregoing protocol layers, refer to related technical specifications of the 3rd generation partnership project (3rd generation partnership project, 3GPP). The radio access network device may be a macro base station (like 110a in FIG. 1), or may be a micro base station or an indoor base station (like 110b in FIG. 1), or may be a relay node or a donor node. A specific technology and a specific device form that are used by the radio access network device are not limited in embodiments of this application. For ease of description, the following provides descriptions by using an example in which the network device is the radio access network device.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The network device and the terminal may be at fixed locations, or may be movable. The network device and the terminal may be deployed on the land, including an indoor device, an outdoor device, a handheld device, or a vehicle-mounted device; may be deployed on the water surface; or may be deployed on an airplane, a balloon, and an artificial satellite. Application scenarios of the network device and the terminal are not limited in embodiments of this application.

Roles of the network device and the terminal may be relative. For example, a helicopter or an uncrewed aerial vehicle 120i in FIG. 1 may be configured as a mobile network device. For the terminal 120j that accesses the radio access network 100 via 120i, the uncrewed aerial vehicle 120i is a network device. However, for the network device 110a, 120i is a terminal. In other words, 110a and 120i communicate with each other according to a radio air interface protocol. Certainly, communication between 110a and 120i may be alternatively performed based on an interface protocol between network devices. In this case, for 110a, 120i is also a network device. Therefore, both the network device and the terminal may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal.

Communication between a network device and a terminal, between network devices, or between terminals may be performed through a licensed spectrum, or may be performed through an unlicensed spectrum, or may be performed through both a licensed spectrum and an unlicensed spectrum. Communication may be performed through a spectrum of 6 gigahertz (gigahertz, GHz) or below, or may be performed through a spectrum of 6 GHz or above. Alternatively, communication may be performed through both a spectrum of 6 GHz or below and a spectrum of 6 GHz or above. A spectrum resource used for wireless communication is not limited in embodiments of this application.

In this embodiment of this application, a function of the network device may be alternatively performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal may alternatively be performed by a module (for example, a chip or a modem) in the terminal, or may be performed by an apparatus including the function of the terminal.

To make the objectives, technical solutions, and advantages of this application clearer, the following further describes this application in detail with reference to the accompanying drawings. A specific operation method in a method embodiment may also be applied to an apparatus embodiment or a system embodiment.

The following describes some terms in embodiments of this application, to facilitate understanding of a person skilled in the art.

### (1) Cell discontinuous reception (cell DRX)

To save energy, a possible inactive time manner is to configure a cycle including active time (active time) and inactive time (inactive time) for a cell of a terminal, so as to save energy. Within the inactive time of the cycle, the terminal does not send some signals. Within the active time of the cycle, the terminal may send the foregoing signals/channels.

The cell DRX is an energy-saving technology for the terminal in an RRC connected state (RRC_CONNECTED). The cell DRX may be configured at a cell (cell) granularity. A network device may send a plurality of cell DRX configurations to the terminal by using RRC signaling, and enable (or activate) one of the plurality of cell DRX configurations in one cell by using downlink control information (downlink control information, DCI) or a MAC control element (control element, CE).

It should be noted that, in embodiments of this application, the cell DRX is short for the foregoing energy-saving technology. For example, the foregoing energy-saving technology may also be referred to as an energy-saving mode 1, an energy-saving configuration 1, or the like. A name of the energy-saving technology is not limited in this application.

The cell DRX configuration may include one or more of the following information: a cycle length, on time, off time, on duration, off duration, or the like. The on time is a start moment of an active time period of a cell DRX cycle, the off time is a start moment of an inactive time period of the cell DRX cycle, the on duration is a duration length of the active time period, and the off duration is a duration length of the inactive time period.

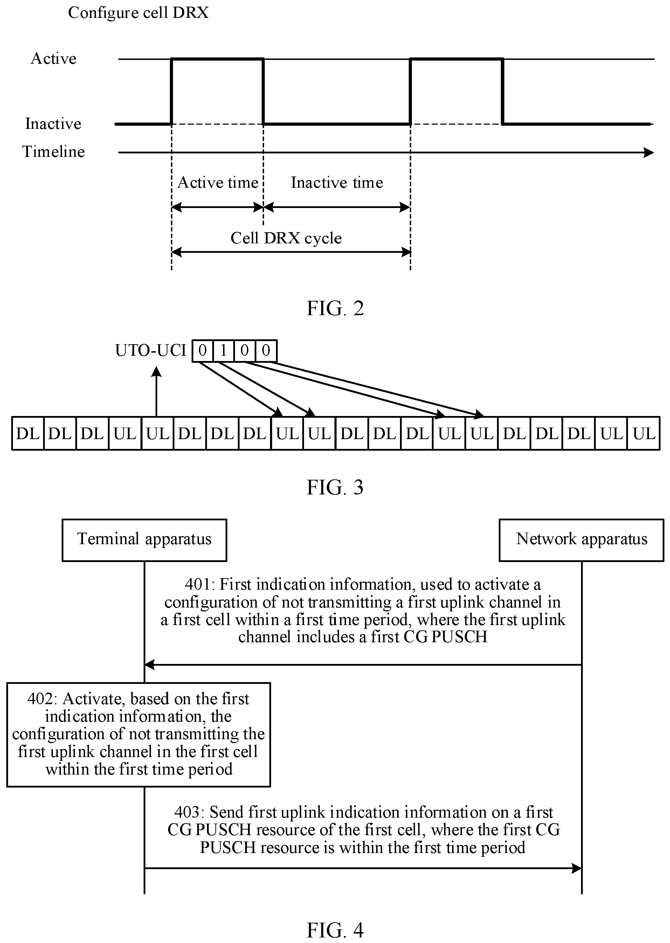

For example, FIG. 2 shows active time and inactive time of the cell DRX cycle. The terminal does not send/receive these signals/channels within the inactive time, to reduce power consumption. As shown in FIG. 2, in one cell DRX cycle, the active time (also referred to as an active period) and the inactive time (also referred to as an inactive period) are included in a time sequence. In embodiments of this application, the inactive time of the cell DRX cycle is referred to as a first time period, and the active time of the cell DRX cycle is referred to as a second time period.

The channels/signals transmitted within the active time of the cell DRX cycle may be uplink channels or uplink signals.

For example, the uplink channel may include at least one of the following channels: a configured grant physical uplink shared channel (configured grant PUSCH, CG PUSCH, where PUSCH is short for physical uplink shared channel in English); a hybrid automatic repeat request-acknowledge (hybrid automatic repeat request-acknowledge, HARQ-ACK) of a semi-persistent scheduled physical downlink shared channel (semi-persistent scheduled physical downlink shared channel, SPS PDSCH); a scheduling request (scheduling request, SR); a physical random access channel (physical random access channel, PRACH); a random access message A; a random access message 3; periodic channel state information (periodic channel state information, P-CSI); semi-persistent CSI (semi-persistent CSI, SP-SCI); and a media access control (media access control, MAC)-layer low-priority logical channel association/a physical-layer low-priority uplink scheduling request.

### (2) XR CG PUSCH

Uplink data transmission supports configured grant (configured grant, CG) scheduling. A core of the CG scheduling is that a network device configures a semi-persistent uplink transmission resource (CG resource) for a terminal. When the semi-persistent uplink transmission resource is configured and activated, the terminal does not need to send a request when transmitting uplink data, and may transmit uplink information based on the uplink transmission resource corresponding to the semi-persistent CG resource configuration.

For an XR (Extended Reality, extended reality) service (a service with a requirement of a high priority and a low latency), the existing NR protocol introduces an XR CG configuration, and the XR service may be transmitted by using an XR CG PUSCH. Specifically, the XR CG PUSCH is a CG PUSCH resource configured with a higher-layer parameter nrofSlots_InCGperiod, or a CG PUSCH resource associated with the higher-layer parameter nrofSlots_InCGperiod. In other words, the higher-layer parameter nrofSlots_InCGperiod is configured (or included or exists) in a configuredGrantConfig field corresponding to the CG PUSCH resource, that is, a CG PUSCH resource configured with the higher-layer parameter is the XR CG PUSCH resource. XR CG PUSCH resources in one or more slots (slots) may form one CG period (CG period), and the foregoing higher-layer parameter nrofSlots_InCGperiod is used to configure a quantity of consecutive slots (slots) corresponding to one CG period.

It may be understood that the CG PUSCH resource has a plurality of names that can be replaced with each other, for example, a CG PUSCH transmission occasion or a CG PUSCH transmission resource.

### (3) Unused transmission occasion-uplink control information (unused transmission occasion-uplink control information, UTO-UCI)

For an XR CG PUSCH, the NR protocol further introduces uplink information, namely, the UTO-UCI. Specifically, a terminal may further send one piece of UTO-UCI when transmitting a CG PUSCH on one CG PUSCH resource, where the UTO-UCI indicates transmission states of a plurality of CG PUSCH resources after the CG PUSCH resource. A transmission state of a CG PUSCH resource may be "transmit" or "not transmit". "Transmit" means that the terminal device can transmit the XR CG PUSCH by using the CG PUSCH resource, and "not transmit" means that the XR CG PUSCH is not transmitted on the CG PUSCH resource. Accordingly, if a network device determines, based on the UTO-UCI sent by the terminal, that the transmission state of the CG PUSCH resource is "transmit", the network device may receive the XR CG PUSCH on the resource. If the network device determines, based on the UTO-UCI sent by the terminal, that the transmission state of the CG PUSCH resource is "not transmit", the network device does not receive the XR CG PUSCH on the resource.

Specifically, the UTO-UCI may include a plurality of bits (bits), and each bit corresponds to one CG PUSCH resource, and indicates a transmission state of the corresponding CG PUSCH resource. If a value of a bit is set to 0, it indicates that the terminal may send the XR CG PUSCH on a corresponding CG PUSCH resource. If a value of a bit is set to 1, it indicates that the terminal does not transmit the XR CG PUSCH on a corresponding CG PUSCH resource. FIG. 3 shows an example of the UTO-UCI. As shown in FIG. 3, a length of the UTO-UCI is configured to 4. The UTO-UCI is reported in a CG PUSCH resource indicated by a black arrow in the figure. A value of the UTO-UCI is "0100", and indicates that, in four CG PUSCH resources after the CG PUSCH resource (that is, the CG PUSCH resource including the UTO-UCI), the terminal may use the 1^{st}, 3^{rd}, and 4^{th} CG PUSCH resources to transmit the XR CG PUSCH, and does not use the 2^{nd} CG PUSCH resource to transmit the XR CG PUSCH. It may be understood that when transmitting the XR CG PUSCH on the 1^{st}, 3^{rd}, and 4^{th} resources, the terminal also reports UTO-UCI with a size of 4 bits in each of these CG PUSCH resources, and each piece of UTO-UCI indicates transmission states of the following four CG PUSCH resources at respective time domain positions.

It should be noted that the UTO-UCI indicates only a transmission state of a valid CG PUSCH resource, in other words, when indication content of the UTO-UCI is determined, a CG PUSCH resource that is considered as an invalid resource needs to be excluded. In the current protocol, in a non-paired spectrum scenario, a CG PUSCH resource that does not satisfy a frame structure configuration (for example, a CG PUSCH resource in a downlink transmission slot) is considered as an invalid CG PUSCH resource.

Currently, the protocol does not define how the terminal sends the XR CG PUSCH in an inactive period of a cell DRX cycle, that is, a behavior of the terminal in this scenario is unclear.

To resolve the foregoing problems, embodiments of this application provide a transmission method and an apparatus. To make the objectives, technical solutions, and advantages of this application clearer, the following further describes this application in detail with reference to the accompanying drawings. A specific operation method in a method embodiment may also be applied to an apparatus embodiment or a system embodiment.

Based on the architecture of the network system shown in FIG. 1 and the content described in the foregoing related technologies, FIG. 4 shows an example of a schematic flowchart of a transmission method according to an embodiment of this application. A solution in FIG. 4 is described by using an example in which a network apparatus and a terminal apparatus interact with each other for execution. For related descriptions of the network apparatus and the terminal apparatus, refer to the foregoing content. Details are not described again.

FIG. 4 is a schematic flowchart of a transmission method according to an embodiment of this application. A procedure may include the following steps.

Step 401: A network apparatus sends first indication information to a terminal apparatus, and correspondingly, the terminal apparatus receives the first indication information.

The first indication information is used to activate a configuration of not transmitting a first uplink channel in a first cell within a first time period, or the first indication information indicates the terminal apparatus not to transmit the first uplink channel in the first cell within the first time period, where the first uplink channel includes a first CG PUSCH. It may be understood that the first indication information is used to activate a transmission configuration, the transmission configuration is specifically not transmitting the first uplink channel in the first cell within the first time period, where the first uplink channel includes the first CG PUSCH. In a possible implementation, the network apparatus may configure one or more transmission configurations by using configuration signaling, for example, RRC signaling, and one of the transmission configurations is subsequently activated by using the first indication information. Activating a transmission configuration may also be understood as enabling the transmission configuration or making the transmission configuration take effect.

In a possible implementation, the first indication information is used to activate a cell DRX configuration. For related descriptions of the cell DRX configuration, refer to the foregoing descriptions. Details are not repeated herein again. In this embodiment of this application, inactive time of a cell DRX cycle is referred to as a first time period, and an active time period of the cell DRX cycle is referred to as a second time period.

In this embodiment of this application, after receiving the first indication information, the terminal apparatus may activate the cell DRX configuration based on the first indication information. The cell DRX configuration activated by using the first indication information specifically includes: not transmitting the first uplink channel in the first cell within the first time period, where the first uplink channel includes the first CG PUSCH. Because the first uplink channel includes the first CG PUSCH, transmission of the first CG PUSCH may be affected by the cell DRX configuration.

The first CG PUSCH includes an XR CG PUSCH. For descriptions of the XR CG PUSCH, refer to the foregoing descriptions of the XR CG PUSCH. Details are not described herein again. In this embodiment of this application, the first CG PUSCH may be carried on one or more CG PUSCH resources, or the first CG PUSCH may be transmitted on one or more CG PUSCH resources. In this embodiment of this application, the CG PUSCH resource may include a first CG PUSCH resource, a second CG PUSCH resource, a third CG PUSCH resource, and the like.

It may be understood that, because the transmission configuration activated by the terminal apparatus is not transmitting the first uplink channel in the first cell within the first time period, where the first uplink channel includes the first CG PUSCH, the one or more CG PUSCH resources used to carry (or transmit) the first CG PUSCH are resources of the first cell. For ease of description, in some descriptions below, a limitation that resources such as the first CG PUSCH resource and the second PUSCH resource are resources of the first cell is omitted.

Optionally, in addition to the first CG PUSCH, the first uplink channel may further include one or more other uplink channels. For a specific example, refer to the foregoing descriptions. Details are not repeated herein again. The terminal apparatus does not transmit the one or more other uplink channels within the first time period, to reduce power consumption.

Step 402: The terminal apparatus activates the transmission configuration based on the first indication information.

Step 403: The terminal apparatus sends first uplink information on the first CG PUSCH resource of the first cell, where the first CG PUSCH resource is within the first time period.

Optionally, the first uplink information indicates transmission states of N CG PUSCH resources, and time domain positions of the N CG PUSCH resources are after a time domain position of the first CG PUSCH resource, where N is an integer greater than 1.

It may be understood that the N CG PUSCH resources are N CG PUSCH resources after the first CG PUSCH resource in time domain. An example in which N=4 is used. An example of the first CG PUSCH resource and four CG PUSCH resources after the first CG PUSCH resource may be shown in FIG. 3.

In a possible implementation, the terminal apparatus may further send the first CG PUSCH on the first CG PUSCH resource. In other words, the terminal apparatus may transmit the first CG PUSCH on a CG PUSCH resource within the inactive time period of the cell DRX cycle, and indicate, on the CG PUSCH resource, transmission states of the following N CG PUSCH resources.

In a possible implementation, the first uplink information is UTO-UCI. The UTO-UCI may include N bits (where N is a positive integer greater than 1), indicating the transmission states of the N CG PUSCH resources after the first CG PUSCH resource. Optionally, the transmission states of the N CG PUSCH resources may all be "transmit" or all be "not transmit"; or transmission states of some CG PUSCH resources are "transmit", and transmission states of other CG PUSCH resources are "not transmit". For specific descriptions, refer to the following descriptions.

Optionally, in the UTO-UCI, a bit corresponding to a CG PUSCH resource may be set to a first value, indicating that a transmission state of the corresponding CG PUSCH resource is "transmit", or a bit corresponding to a CG PUSCH resource is set to a second value, indicating that a transmission state of the corresponding CG PUSCH resource is "not transmit". Optionally, the first value may be "0", and the second value may be "1".

It may be understood that the first uplink information may alternatively be in another data structure or data form, provided that the first uplink information can indicate the transmission states of the N CG PUSCH resources after the first CG PUSCH resource. This is not limited in embodiments of this application.

In this embodiment of this application, on a CG PUSCH resource within the second time period, the terminal apparatus may transmit the first CG PUSCH. Correspondingly, when reporting the UTO-UCI, the terminal sets a transmission state of the CG PUSCH resource within the second time period to "transmit".

In the foregoing embodiment of this application, a problem of how to transmit the first CG PUSCH on the CG PUSCH resource within the first time period is resolved, and how to indicate the CG PUSCH resource within the inactive time period by the UTO-UCI is specified. For an XR service, in this embodiment of this application, XR CG PUSCH transmission may be performed on an XR CG PUSCH resource within the inactive time period of the cell DRX cycle. Therefore, a requirement of a high priority and a low latency of the XR service may be satisfied. Further, in this embodiment of this application, based on a data amount of the XR service, a quantity of resources for transmitting the XR CG PUSCH within the inactive time period of the cell DRX cycle may be determined, so that system flexibility is improved, the requirement of a high priority and a low latency of the XR service can be ensured, and power consumption overheads are taken into account.

In a possible implementation, before the terminal apparatus sends the first uplink information on the first CG PUSCH resource, the method further includes: The terminal apparatus sends second uplink information on the second CG PUSCH resource of the first cell, where the second uplink information indicates a transmission state of the first CG PUSCH resource, and the transmission state of the first CG PUSCH resource is "transmit". In other words, the transmission state of the first CG PUSCH resource is indicated by the second uplink information sent on the second CG PUSCH resource before the first CG PUSCH resource, and the transmission state of the first CG PUSCH resource indicated by the second uplink information is "transmit". In this way, the terminal apparatus can transmit the CG PUSCH and the first uplink information on the first CG PUSCH resource.

It may be understood that, a time domain position of the second CG PUSCH resource is before the time domain position of the first CG PUSCH resource. The second CG PUSCH resource may be adjacent to the first CG PUSCG resource, or the second CG PUSCH resource may be separated from the first CG PUSCG resource by one or more CG PUSCH resources. A quantity of intervening CG PUSCH resources is related to a value of N, or is related to a quantity of bits of the UTO-UCI.

It may be understood that the second CG PUSCH resource may be within the first time period, or may be within the second time period.

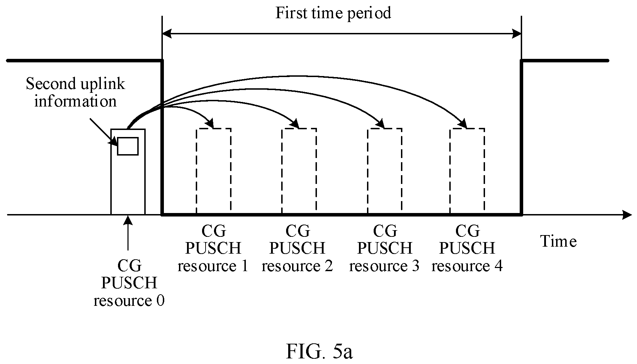

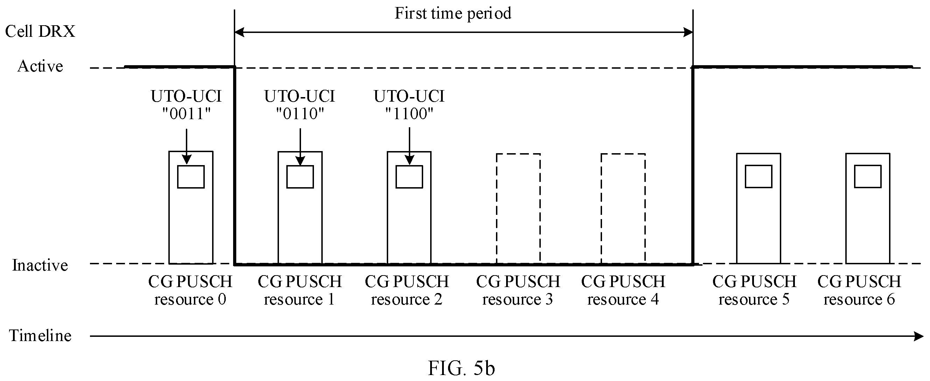

An example in which N=4 is used. As shown in FIG. 5a, when the second CG PUSCH resource (represented as a CG PUSCH resource 0 in the figure) is within the second time period, the first CG PUSCH resource may be any one of CG PUSCH resources 1, 2, 3, and 4 in FIG. 5a. As shown in FIG. 5b, an example in which UTO-UCI sent on the CG PUSCH resource 0 is "0011" is used. Transmission states corresponding to the CG PUSCH resource 1 and the CG PUSCH resource 2 are set to "0", indicating that the first CG PUSCH can be transmitted on the CG PUSCH resource 1 and the CG PUSCH resource 2. Transmission states of the CG PUSCH resource 3 and the CG PUSCH resource 4 are set to "1", indicating that the first CG PUSCH is not transmitted on the CG PUSCH resource 3 or the CG PUSCH resource 4. When transmitting the first CG PUSCH on the CG PUSCH resource 1, the terminal apparatus may simultaneously report UTO-UCI. For example, the UTO-UCI reported on the CG PUSCH resource 1 is "0110", where the last bit indicates a transmission state of a CG PUSCH resource 5. Because the CG PUSCH resource 5 is within the active time period of the cell DRX cycle, the transmission state of the CG PUSCH resource 5 is set to "0", indicating that the first CG PUSCH can be transmitted on the CG PUSCH resource 5. When transmitting the first CG PUSCH on the CG PUSCH resource 2, the terminal apparatus may simultaneously report UTO-UCI. For example, the UTO-UCI reported on the CG PUSCH resource 2 is "1100", where the last two bits indicate transmission states of CG PUSCH resources 5 and 6. Because the CG PUSCH resources 5 and 6 are within the active time period of the cell DRX cycle, the transmission states of the CG PUSCH resources 5 and 6 are set to "0", indicating that the CG PUSCH can be transmitted on the CG PUSCH resources 5 and 6.

It may be understood that in this embodiment of this application, an example in which a transmission state set to "0" indicates that the first CG PUSCH can be transmitted is used for description. Certainly, the transmission state may be set to "1" to indicate that the first CG PUSCH can be transmitted. Alternatively, a plurality of bits may indicate a transmission state of one first CG PUSCH resource. Correspondingly, there are more possibilities for a value of the transmission state. Alternatively, a joint encoding manner is used for indication, to be specific, various combinations of different transmission states of the N CG PUSCH resources are separately encoded, and the terminal apparatus may report one code to indicate one combination of the transmission states of the N CG PUSCH resources. This is not limited in this application.

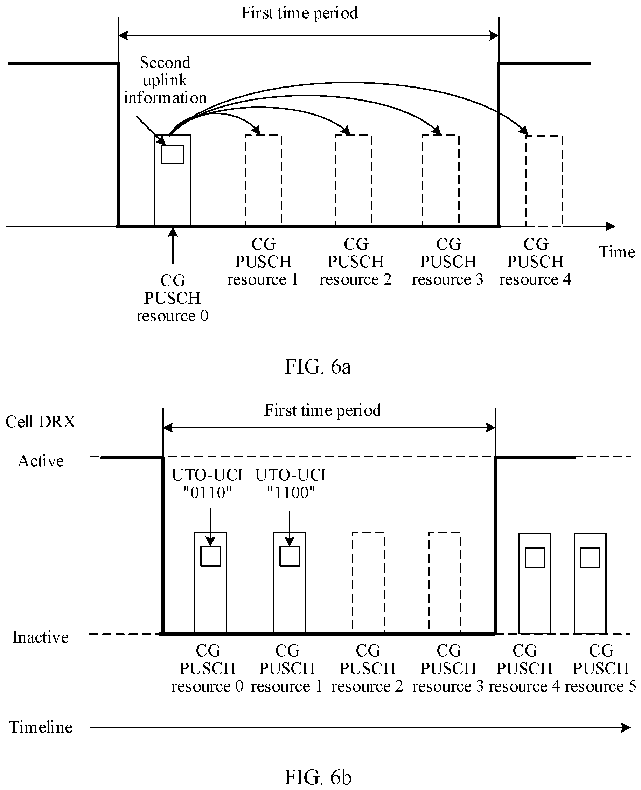

For another example, an example in which N=4 is still used. As shown in FIG. 6a, when the second CG PUSCH resource (represented as a CG PUSCH resource 0 in the figure) is within the first time period, the second CG PUSCH resource may be any one of CG PUSCH resources 1, 2, and 3 in FIG. 6a. As shown in FIG. 6b, an example in which UTO-UCI sent on the CG PUSCH resource 0 is "0110" is used. A transmission state of the CG PUSCH resource 1 is set to "0", indicating that the first CG PUSCH can be transmitted on the CG PUSCH resource 1. Transmission states of the CG PUSCH resources 2 and 3 are set to "1", indicating that the first CG PUSCH is not transmitted on either of the CG PUSCH resources 2 and 3. Because a CG PUSCH resource 4 is within the active time period of the cell DRX cycle, a transmission state of the CG PUSCH resource 4 is set to "0", indicating that the CG PUSCH can be transmitted on the CG PUSCH resource 4. When transmitting the first CG PUSCH on the CG PUSCH resource 1, the terminal apparatus may simultaneously report UTO-UCI. For example, the UTO-UCI reported on the CG PUSCH resource 1 is "1100", where the last two bits indicate transmission states of CG PUSCH resources 4 and 5. Because the CG PUSCH resources 4 and 5 are within the active time period of the cell DRX cycle, the transmission states of the CG PUSCH resources 4 and 5 are set to "0", indicating that the first CG PUSCH can be transmitted on the CG PUSCH resources 4 and 5.

Although FIG. 5b and FIG. 6b show examples of CG PUSCH transmission performed on a plurality of CG PUSCH resources within the first time period, it may be understood that there may be a case in which the first CG PUSCH is transmitted only on one CG PUSCH resource within the first time period. A quantity of CG PUSCH resources for CG PUSCH transmission within the first time period is related to the data amount of the XR service. The data amount of the XR service may be large, and a plurality of CG PUSCH resources need to be used for transmission. For example, in FIG. 5b, the terminal apparatus determines that transmission of the XR service cannot be completed by using the CG PUSCH resource 0 within the active time period of the cell DRX cycle, and two CG PUSCH resources are further required to complete transmission. Therefore, the transmission states corresponding to the following CG PUSCH resources 1 and 2 within the inactive time period of the cell DRX cycle are set to "transmit", and the first CG PUSCH is transmitted by using the CG PUSCH resources 1 and 2. Certainly, if the data amount of the XR service is large, and transmission cannot be completed by using the CG PUSCH resources 1 and 2, all CG PUSCH resources within the active time period of the cell DRX cycle may be used to transmit the first CG PUSCH.

In an exception, if the terminal apparatus determines that, for the XR service, transmission of data of the XR service can be completed by using the CG PUSCH resource 0 within the active time period of the cell DRX cycle, transmission states corresponding to a plurality of following CG PUSCH resources (for example, the CG PUSCH resources 1, 2, 3, and 4) within the inactive time period of the cell DRX cycle may be set to "not transmit", and the terminal apparatus does not transmit the first CG PUSCH by using any one of the CG PUSCH resources 1, 2, 3, and 4.

In a possible implementation, the first CG PUSCH resource belongs to a first CG period, the first CG period further includes a third CG PUSCH resource, and the third CG PUSCH resource is not within the first time period. In other words, the first CG period includes a plurality of CG PUSCH resources, some of the resources are within the inactive time period of the cell DRX cycle (for example, including the first CG PUSCH resource), and other resources are within the active time period of the cell DRX cycle (for example, the third CG PUSCH resource). In this case, a CG PUSCH resource within the inactive time period of the cell DRX cycle in the first CG period may be used to transmit the first CG PUSCH.

Optionally, all CG PUSCH resources within the first time period in the first CG period are used for CG PUSCH transmission, and transmission states corresponding to these resources are all set to "transmit".

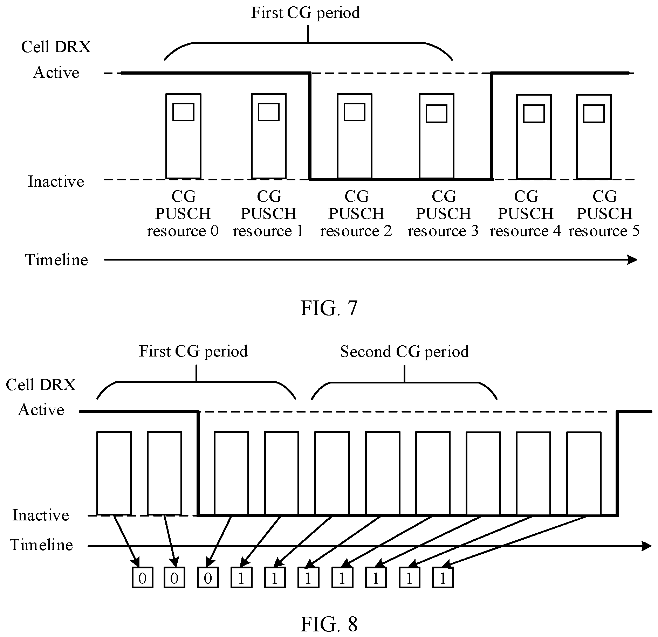

For example, FIG. 7 shows transmission states of CG PUSCH resources in the first CG period by using an example in which the first CG period includes four CG PUSCH resources. As shown in the figure, there are four CG PUSCH resources in the first CG period, which are respectively CG PUSCH resources 0, 1, 2, and 3. The CG PUSCH resources 0 and 1 are within the active time period of the cell DRX cycle, and the CG PUSCH resource 0 and/or the CG PUSCH resource 1 are/is equivalent to the foregoing third CG PUSCH resource. The CG PUSCH resources 2 and 3 are within the inactive time period of the cell DRX cycle, and the CG PUSCH resource 2 and/or the CG PUSCH resource 3 are/is equivalent to the foregoing first CG PUSCH resource. In this case, although the CG PUSCH resources 2 and 3 in the first CG period are within the inactive time period of the cell DRX cycle, the CG PUSCH resources 2 and 3 are also used for transmission of the first CG PUSCH. When determining UTO-UCI, the terminal sets transmission states of the CG PUSCH resources 2 and 3 to "transmit". Because the CG PUSCH resources 0 and 1 are within the active time period of the cell DRX cycle, the terminal apparatus may transmit the first CG PUSCH by using the CG PUSCH resources 0 and 1. When determining UTO-UCI, the terminal sets transmission states of the CG PUSCH resources 0 and 1 to "transmit". For example, as shown in FIG. 7, the terminal apparatus sends the UTO-UCI on the CG PUSCH resources 0, 1, 2, and 3 (as shown by small blocks in each CG PUSCH resource in the figure).

In a possible implementation, the terminal apparatus may further determine that the first CG PUSCH is not transmitted on a fourth CG PUSCH resource, where the fourth CG PUSCH resource belongs to a second CG period, and all CG PUSCH resources in the second CG period are within the first time period. In other words, the terminal apparatus may determine that the first CG PUSCH is not transmitted on any one of the CG PUSCH resources in the second CG period within the first time period. Further, the terminal apparatus may send third uplink information on a fifth CG PUSCH resource of the first cell, where the third uplink information indicates a transmission state of the fourth CG PUSCH resource, and the transmission state of the fourth CG PUSCH resource is "not transmit". In other words, all the CG PUSCH resources in the second CG period are within the first time period, a transmission state of one of the CG PUSCH resources is indicated by the third uplink information sent on the fifth CG PUSCH resource, and the transmission state of the CG PUSCH resource is set to "not transmit".

Optionally, when determining a transmission state of a CG PUSCH resource, or when determining UTO-UCI, the terminal apparatus sets the transmission state of the CG PUSCH resource to "not transmit" provided that the CG PUSCH resource includes the CG PUSCH resource in the second CG period. In other words, transmission states of all the CG PUSCH resources in the second CG period are set to "not transmit", and the first CG PUSCH is not sent on any one of the CG PUSCH resources in the second CG period.

For example, in FIG. 8, an example in which the first CG period and the second CG period each include four CG PUSCH resources is used. All the CG PUSCH resources in the second CG period are within the inactive time period of the cell DRX cycle. Therefore, transmission states of all the CG PUSCH resources in the second CG period are set to "not transmit". Some CG PUSCH resources in the first CG period are within the active time period of the cell DRX cycle, and other CG PUSCH resources are within the active time period of the cell DRX cycle. Therefore, all CG PUSCH resources within the inactive time period of the cell DRX cycle in the first CG period are used to transmit the first CG PUSCH. In FIG. 8, an example in which eight bits are used for UTO-UCI to indicate transmission states of eight CG PUSCH resources is used. UTO-UCI sent on the 1^{st} CG PUSCH resource within the active time period of the cell DRX cycle is " 00111111". The 5^{th} to 8^{th} bits correspond to the four CG PUSCH resources in the second CG period, and the transmission states corresponding to the four CG PUSCH resources are set to "1", indicating that the first CG PUSCH is not transmitted on any one of the four CG PUSCH resources. The 3^{rd} and 4^{th} bits correspond to latter two CG PUSCH resources in the first CG period. Because the first CG PUSCH can be transmitted by using the 3^{rd} CG PUSCH resource in the first CG period, a transmission state corresponding to the 3^{rd} CG PUSCH resource in the first CG period may be set to "1". UTO-UCI sent on the 2^{nd} CG PUSCH resource within the active time period of the cell DRX cycle is " 01111111". The 3^{rd} to 6^{th} bits correspond to the four CG PUSCH resources in the second CG period, the transmission states corresponding to the four CG PUSCH resources are set to "1", indicating that the first CG PUSCH is not transmitted on any one of the four CG PUSCH resources.

In a possible implementation, the first time period includes all the CG PUSCH resources in the second CG period. The terminal apparatus may determine that the first CG PUSCH is not transmitted on any one of the CG PUSCH resources in the second CG period, or all the CG PUSCH resources in the second CG period are invalid resources, and the terminal apparatus does not indicate, in the first uplink information, the transmission states of any one of the CG PUSCH resources in the second CG period. In other words, if all the CG PUSCH resources in the second CG period are within the first time period, the terminal does not transmit the first CG PUSCH on any one of these resources, and does not report any one of the transmission states of these resources. For the network apparatus, because the CG PUSCH resource is configured in a semi-persistent manner on a network side, the network apparatus may determine, based on the first uplink information reported by the terminal apparatus, that the transmission states of all the CG PUSCH resources in the second CG period are not included. Therefore, it may be determined that these resources are determined by the terminal apparatus as invalid resources, and accordingly, the network apparatus does not receive the first CG PUSCH on any one of these resources.

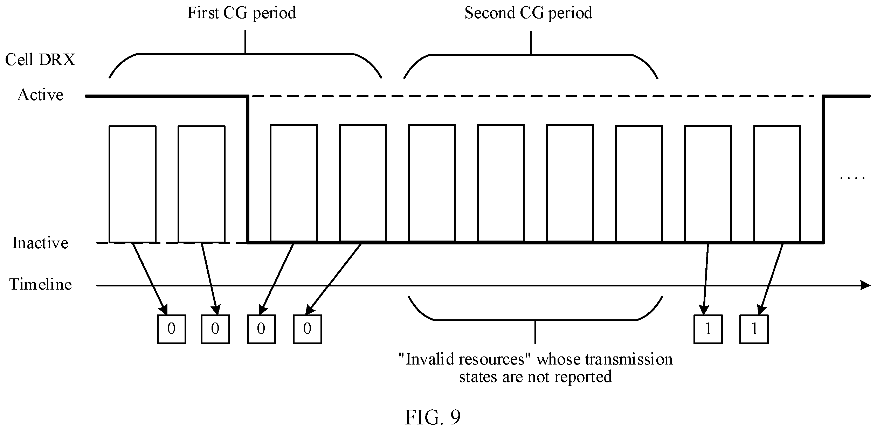

For example, in FIG. 9, an example in which the first CG period and the second CG period each include four CG PUSCH resources is used. All the CG PUSCH resources in the second CG period are within the inactive time period of the cell DRX cycle. Therefore, the terminal apparatus does not transmit the first CG PUSCH on any one of the CG PUSCH resources in the second CG period. Some CG PUSCH resources in the first CG period are within the active time period of the cell DRX cycle, and other CG PUSCH resources are within the active time period of the cell DRX cycle. Therefore, all CG PUSCH resources within the inactive time period of the cell DRX cycle in the first CG period are used to transmit the first CG PUSCH. In FIG. 9, an example in which four bits are used for UTO-UCI to indicate transmission states of four CG PUSCH resources is used. UTO-UCI sent on the 1^{st} CG PUSCH resource within the active time period of the cell DRX cycle is "0001". The 2^{nd} to 4^{th} bits correspond to latter three CG PUSCH resources in the first CG period, and transmission states corresponding to the latter three CG PUSCH resources are set to "0", indicating that the first CG PUSCH is transmitted on the latter three CG PUSCH resources. The following one bit corresponds to the first one of the last two CG PUSCH resources within the inactive time period, and a transmission state corresponding to the first one of the last two CG PUSCH resources is set to "1", indicating that the first CG PUSCH is not transmitted on the first one of the last two CG PUSCH resources. UTO-UCI sent on the 2^{nd} CG PUSCH resource within the active time period of the cell DRX cycle is "0011". The 1^{st} and 2^{nd} bits correspond to latter two CG PUSCH resources in the first CG period, and transmission states corresponding to the latter two CG PUSCH resources are set to "0", indicating that the first CG PUSCH is transmitted on the latter two CG PUSCH resources. The following two bits correspond to the last two CG PUSCH resources within the inactive time period, and transmission states corresponding to the last two CG PUSCH resources are set to "1", indicating that the first CG PUSCH is not transmitted on either of the last two CG PUSCH resources.

In a possible implementation, the terminal apparatus may determine a transmission state of a CG PUSCH resource based on a first parameter, for example, determine a transmission state of a CG PUSCH resource within the first time period based on the first parameter. For example, the first parameter indicates how the terminal apparatus sets the transmission state of the CG PUSCH resource, for example, how to set the transmission state of the CG PUSCH resource within the first time period, or the first parameter indicates how the terminal apparatus sets, for a CG PUSCH resource in a CG period, a transmission state of the CG PUSCH resource based on whether the CG period overlaps with the first time period (including complete overlap or partial overlap). Alternatively, the first parameter may further indicate a case in which the terminal apparatus determines the CG PUSCH resource as an invalid resource.

Optionally, the first parameter may be configured by a higher layer of a terminal device, or may be determined by a higher layer of a terminal device, or may be configured by a network device. Correspondingly, in a possible implementation, the network apparatus may send configuration information including the first parameter to the terminal apparatus.

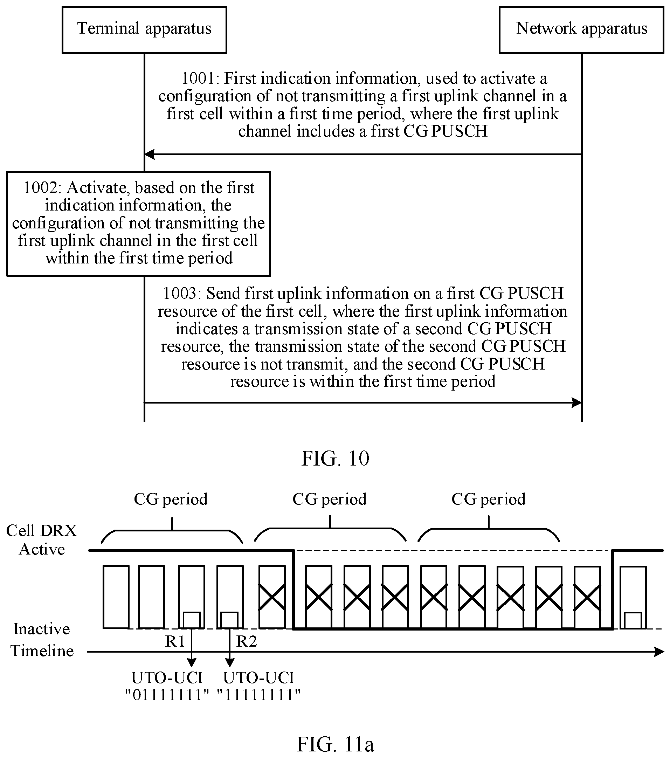

Based on the architecture of the network system shown in FIG. 1 and the content described in the foregoing related technologies, FIG. 10 shows an example of a schematic flowchart of a transmission method according to another embodiment of this application. A solution in FIG. 10 is described by using an example in which a network apparatus and a terminal apparatus interact with each other for execution. For related descriptions of the network apparatus and the terminal apparatus, refer to the foregoing content. Details are not described again.

FIG. 10 is a schematic flowchart of a transmission method according to an embodiment of this application. A procedure may include the following steps.

Step 1001: A network apparatus sends first indication information, and correspondingly, a terminal apparatus receives the first indication information.

Step 1002: The terminal apparatus activates a transmission configuration based on the first indication information, for example, activates a cell DRX configuration.

For specific implementations of steps 1001 and 1002, refer to related steps in FIG. 4.

Step 1003: The terminal apparatus sends first uplink information on a first CG PUSCH resource of a first cell, and correspondingly, the network apparatus receives the first uplink information on the first CG PUSCH resource.

The first uplink information indicates a transmission state of a second CG PUSCH resource, the transmission state of the second CG PUSCH is "not transmit", and the second CG PUSCH resource is within a first time period. In other words, the terminal apparatus does not transmit a first CG PUSCH on a CG PUSCH resource within an inactive time period of a cell DRX cycle, and a transmission state corresponding to the CG PUSCH resource is "not transmit".

In a possible implementation, the first uplink information is UTO-UCI. The UTO-UCI may include N bits (where N is a positive integer greater than 1), indicating transmission states of N CG PUSCH resources after the first CG PUSCH resource. If M CG PUSCH resources in the N CG PUSCH resources are within the first time period, transmission states corresponding to the M CG PUSCH resources are set to "not transmit", where M is a positive integer greater than or equal to 1.

It may be understood that the first uplink information may alternatively be in another data structure or data form, provided that the first uplink information can indicate the transmission states of the N CG PUSCH resources after the first CG PUSCH resource. This is not limited in embodiments of this application.

In the foregoing embodiment of this application, a problem of how to transmit the first CG PUSCH on the CG PUSCH transmission resource within the first time period is resolved, how to indicate the CG PUSCH resource within the inactive time period by the UTO-UCI is specific, and a problem of an unclear behavior on a terminal side is resolved.

In a possible implementation, the second CG PUSCH resource belongs to a first CG period, the first CG period further includes a third CG PUSCH resource, and the third CG PUSCH resource is not within the first time period, or the third CG PUSCH resource is within a second time period. Accordingly, the terminal apparatus may determine that the second CG PUSCH resource and/or the third CG PUSCH resource are/is not used to transmit the first CG PUSCH. In other words, if some resources in the first CG period are within the first time period, and other resources are within the second time period, the first CG PUSCH is not transmitted on any one of all CG PUSCH resources in the first CG period within the second time period. Alternatively, the first CG PUSCH is not transmitted on any one of all CG PUSCH resources in the first CG period.

Optionally, in an implementation, when determining the first uplink information, the terminal apparatus indicates, in the first uplink information, that the first CG PUSCH is not transmitted on the second CG PUSCH resource within the first time period and/or the third CG PUSCH resource within the second time period in the CG period, and the terminal apparatus may set, in the uplink information, the transmission resource of the second CG PUSCH resource and/or a transmission resource of the third CG PUSCH resource to "not transmit". In another implementation, when determining the first uplink information, the terminal apparatus determines that the second CG PUSCH resource within the first time period and/or the third CG PUSCH resource within the second time period in the first CG period are/is invalid resources/an invalid resource, and do not indicate, in the first uplink information, the transmission state of the second CG PUSCH resource and/or a transmission state of the third CG PUSCH resource.

It may be understood that, there may be one or more second CG PUSCH resources within the first time period in the first CG period, and there may also be one or more third CG PUSCH resources within the second time period in the first CG period.

In a possible implementation, the first time period includes all CG PUSCH resources in a second CG period, the terminal apparatus may determine that the first CG PUSCH is not transmitted on any one of all the CG PUSCH resources in the second CG period, and the terminal apparatus may set transmission resources of all the PUSCH resources in the second CG period to "not transmit". In another possible implementation, when determining the first uplink information, the terminal apparatus may determine all CG PUSCH resources in a second CG period as invalid resources, and the terminal apparatus does not indicate, in the first uplink information, transmission states of all the CG PUSCH resources in the second CG period. In other words, if all the CG PUSCH resources in the second CG period are within the first time period, the terminal does not transmit the first CG PUSCH on any one of these resources, and does not report any one of the transmission states of these resources. For the network apparatus, because the CG PUSCH resource is configured in a semi-persistent manner on a network side, the network apparatus may determine, based on the first uplink information reported by the terminal apparatus, that the transmission states of all the CG PUSCH resources in the second CG period are not included. Therefore, it may be determined that these resources are considered by the terminal apparatus as invalid resources, and accordingly, the network apparatus does not receive the first CG PUSCH on any one of these resources.

For example, in FIG. 11a, an example in which one CG period includes four CG PUSCH resources is used, to show a transmission state of a CG PUSCH resource in each CG period. In FIG. 11a, transmission states of CG PUSCH resources corresponding to a solid box including a cross line mark are "not transmit", and transmission states of CG PUSCH resources corresponding to a solid box not including a cross line mark are "transmit". When generating the UTO-UCI, the terminal apparatus sets a value of a corresponding bit to "1". An example in which eight bits are used for the UTO-UCI to indicate transmission states of eight CG PUSCH resources is used. UTO-UCI sent on the CG PUSCH resource R1 is " 01111111", and UTO-UCI sent on the CG PUSCH resource R2 is " 11111111".

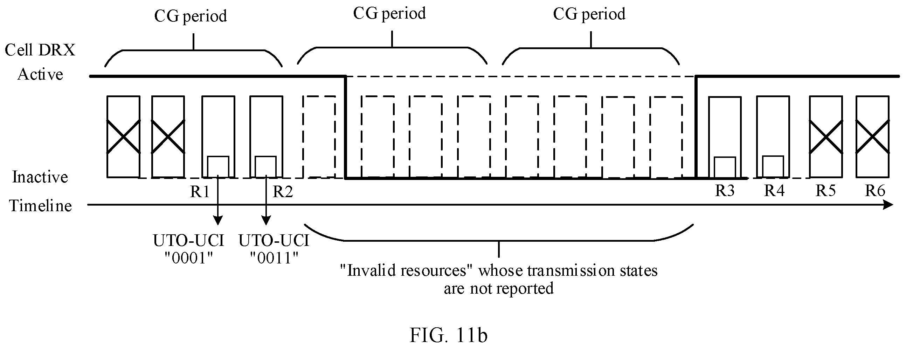

For another example, FIG. 11b still uses an example in which one CG period includes four CG PUSCH resources, to show CG PUSCH resources determined by the terminal apparatus as invalid resources. In FIG. 11b, transmission states of CG PUSCH resources corresponding to a solid box including a cross line mark are "not transmit", transmission states of CG PUSCH resources corresponding to a solid box not including a cross line mark are "transmit", and CG PUSCH resources corresponding to a dashed box are invalid resources determined by the terminal apparatus. When generating the UTO-UCI, the terminal apparatus determines that all CG PUSCH resources in two CG periods shown in the figure are invalid resources. An example in which four bits are used for the UTO-UCI to indicate transmission states of four CG PUSCH resources is used. UTO-UCI sent on a CG PUSCH resource R1 is "0001", and the four bits sequentially indicate a transmission state of the CG PUSCH resource R1 and transmission states of CG PUSCH resources R3, R4, and R5 within a second time period of a next cell DRX cycle. UTO-UCI sent by the terminal apparatus on a CG PUSCH resource R2 is "0011", and the four bits sequentially indicate transmission states of CG PUSCH resources R3, R4, R5, and R6 within the second time period of the next cell DRX cycle.

In a possible implementation, the terminal apparatus may determine the transmission state of the CG PUSCH resource based on the first parameter. For related descriptions of the first parameter, refer to the foregoing embodiment.

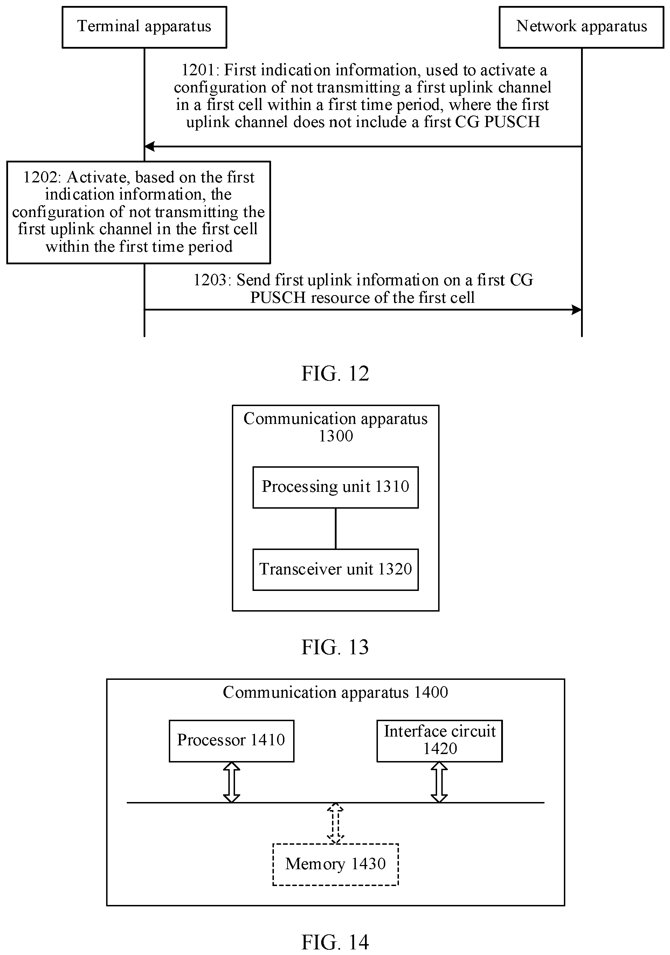

Based on the architecture of the network system shown in FIG. 1 and the content described in the foregoing related technologies, FIG. 12 is an example of a schematic flowchart of a transmission method according to another embodiment of this application. A solution in FIG. 12 is described by using an example in which a network apparatus and a terminal apparatus interact with each other for execution. For related descriptions of the network apparatus and the terminal apparatus, refer to the foregoing content. Details are not described again.

FIG. 12 is a schematic flowchart of a transmission method according to an embodiment of this application. A procedure may include the following steps.

Step 1201: A network apparatus sends first indication information, and correspondingly, a terminal apparatus receives the first indication information.

The first indication information is used to activate a configuration of not transmitting a first uplink channel in a first cell within a first time period, where the first uplink channel does not include a first CG PUSCH. It may be understood that the first indication information is used to activate a transmission configuration, the transmission configuration is specifically not transmitting the first uplink channel in the first cell within the first time period, where the first uplink channel does not include the first CG PUSCH. In a possible implementation, the network apparatus may configure one or more transmission configurations by using configuration signaling, for example, RRC signaling, and one transmission configuration is subsequently activated by using the first indication information. Activating a transmission configuration may also be understood as enabling the transmission configuration or making the transmission configuration take effect.

In a possible implementation, the first indication information is used to activate a cell DRX configuration. For related descriptions of the cell DRX configuration, refer to the foregoing descriptions. Details are not repeated herein again. In embodiments of this application, inactive time of a cell DRX cycle is referred to as a first time period, and an active time period of the cell DRX cycle is referred to as a second time period.

In embodiments of this application, after receiving the first indication information, the terminal apparatus may activate the cell DRX configuration based on the first indication information. The cell DRX configuration activated by using the first indication information specifically includes: not transmitting a first uplink channel in a first cell within a first time period, where the first uplink channel does not include a first CG PUSCH. Because the first uplink channel does not include the first CG PUSCH, transmission of the CG PUSCH is not affected by the cell DRX configuration.

The first CG PUSCH includes an XR CG PUSCH. For descriptions of the XR CG PUSCH, refer to the foregoing descriptions of the XR CG PUSCH. Details are not described herein again.

Optionally, the first uplink channel includes a second CG PUSCH, and the second CG PUSCH includes one or more of the following: a low-priority CG PUSCH at a physical layer, a CG PUSCH associated with a MAC-layer low-priority logical channel (logical channel, LCH), and a CG PUSCH not configured with a higher-layer parameter nrofSlots_InCGperiod.

Optionally, the low-priority CG PUSCH at the physical layer includes a CG PUSCH with a phy-PriorityIndex field configured as p0.

Optionally, the CG PUSCH associated with the MAC-layer low-priority logical channel (logical channel, LCH) may include, for example, an SR associated with a logical channel whose MAC priority is greater than or equal to X, or a CG PUSCH associated with a logical channel whose priority (priority) configured in a logical channel configuration (LogicalChannelConfig) is less than and/or equal to X, where X is an integer less than or equal to 16. Alternatively, the CG PUSCH associated with the MAC-layer low-priority logical channel LCH may be understood as a CG PUSCH greater than or equal to a preset threshold. The preset threshold may be preconfigured, or may be configured.

For example, the preset threshold is a threshold of a priority configuration value. For example, if the threshold of the preset priority configuration value is 6, a CG PUSCH whose priority configuration value is greater than or equal to 6 is the CG PUSCH associated with the MAC-layer low-priority logical channel LCH.

Alternatively, CG PUSCHs associated with the MAC-layer low-priority logical channel LCH may be CG PUSCHs associated with some LCHs with higher priority (priority) configuration values when a plurality of CG PUSCHs associated with LCHs are configured.

For example, a priority configuration value of LCH#A is 1, a priority configuration value of LCH#B is 5, and a priority configuration value of LCH#C is 10. In a possible implementation, the CG PUSCH associated with the MAC-layer low-priority logical channel LCH is LCH#C. In another possible implementation, CG PUSCHs associated with the MAC-layer low-priority logical channel LCH are LCH#C and LCH#B.

Optionally, the CG PUSCH not configured with the higher-layer parameter nrofSlots_InCGperiod may also be understood as a CG PUSCH not associated with the higher-layer parameter nrofSlots_InCGperiod, or one or more CG PUSCHs that are not XR CG PUSCHs in CG PUSCHs.

Step 1202: The terminal apparatus activates the transmission configuration based on the first indication information, for example, activates the cell DRX configuration.

Step 1203: The terminal apparatus sends first uplink information on a first CG PUSCH resource of the first cell, and correspondingly, the network apparatus receives the first uplink information on the first CG PUSCH resource.

The first uplink information indicates a transmission state of a second CG PUSCH resource. The second CG PUSCH resource may be within the first time period or may be within the second time period. A transmission state of the second CG PUSCH resource may be "transmit", or may be "not transmit". In other words, transmission of the CG PUSCH is not affected by the cell DRX configuration, or the transmission state of the CG PUSCH resource is not affected by the cell DRX configuration.

Optionally, when the terminal apparatus needs to transmit data of an XR service, because transmission of an XR CG PUSCH is not affected by the cell DRX configuration, even if the terminal apparatus activates the cell DRX configuration, the terminal apparatus may transmit the XR CG PUSCH in the inactive time of the cell DRX cycle, so that a latency requirement of the XR service may be satisfied.

In a possible implementation, the terminal apparatus may determine the transmission state of the CG PUSCH resource based on the first parameter. For related descriptions of the first parameter, refer to the foregoing embodiment.

In the foregoing embodiment of this application, transmission of the XR CG PUSCH is not affected by the cell DRX configuration, and the terminal may select to send the XR CG PUSCH in the inactive time of the cell DRX cycle, so that a problem of how the terminal sends the XR CG PUSCH in the inactive time of the cell DRX is resolved.

It may be understood that, to implement the functions in the foregoing embodiments, a network device and a terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 13 and FIG. 14 are diagrams of structures of possible communication apparatuses according to embodiments of this application. The communication apparatuses may be configured to implement functions of the terminal apparatus or the network apparatus in the foregoing method embodiments. Therefore, beneficial effects of the foregoing method embodiments can also be implemented. In embodiments of this application, the communication apparatus may be one of the terminals 120a to 120j shown in FIG. 1, or may be the base station 110a or 110b shown in FIG. 1, or may be a module (for example, a chip) used in the terminal or the base station.

As shown in FIG. 13, a communication apparatus 1300 includes a processing unit 1310 and a transceiver unit 1320. The communication apparatus 1300 is configured to implement functions of the terminal apparatus or the network apparatus in the method embodiment shown in any one of FIG. 4, FIG. 10, or FIG. 12.

When the communication apparatus 1300 is configured to implement the functions of the terminal apparatus in the method embodiment shown in FIG. 4, the transceiver unit 1320 receives first indication information, where the first indication information is used to activate a configuration of not transmitting a first uplink channel in a first cell within a first time period, where the first uplink channel includes a first CG PUSCH. The processing unit 1310 sends first uplink information on a first CG PUSCH resource of the first cell through the transceiver unit 1320, where the first CG PUSCH resource is within the first time period.

When the communication apparatus 1300 is configured to implement the functions of the network apparatus in the method embodiment shown in FIG. 4, the processing unit 1310 sends first indication information through the transceiver unit 1320, where the first indication information is used to activate a configuration of not transmitting a first uplink channel in a first cell within a first time period, where the first uplink channel includes a first CG PUSCH. The transceiver unit 1320 receives first uplink information on a first CG PUSCH resource of the first cell, where the first CG PUSCH resource is within the first time period.

When the communication apparatus 1300 is configured to implement the functions of the terminal apparatus in the method embodiment shown in FIG. 10, the transceiver unit 1320 receives first indication information, where the first indication information is used to activate a configuration of not transmitting a first uplink channel in a first cell within a first time period, where the first uplink channel includes a first CG PUSCH. The processing unit 1310 sends first uplink information on a first CG PUSCH resource of the first cell through the transceiver unit 1320, where the first uplink information indicates a transmission state of a second CG PUSCH resource, the transmission state of the second CG PUSCH is "not transmit", and the second CG PUSCH resource is within the first time period.

When the communication apparatus 1300 is configured to implement the functions of the network apparatus in the method embodiment shown in FIG. 10, the processing unit 1310 sends first indication information through the transceiver unit 1320, where the first indication information is used to activate a configuration of not transmitting a first uplink channel in a first cell within a first time period, where the first uplink channel includes a first CG PUSCH. The transceiver unit 1320 receives first uplink information on a first CG PUSCH resource of the first cell, where the first uplink information indicates a transmission state of a second CG PUSCH resource, the transmission state of the second CG PUSCH is "not transmit", and the second CG PUSCH resource is within the first time period.

When the communication apparatus 1300 is configured to implement the functions of the terminal apparatus in the method embodiment shown in FIG. 12, the transceiver unit 1320 receives first indication information, where the first indication information is used to activate a configuration of not transmitting a first uplink channel in a first cell within a first time period, where the first uplink channel does not include a first CG PUSCH. The processing unit 1310 sends the first uplink information on a first CG PUSCH resource of the first cell through the transceiver unit 1320.

When the communication apparatus 1300 is configured to implement the functions of the network apparatus in the method embodiment shown in FIG. 12, the processing unit 1310 sends first indication information through the transceiver unit 1320, where the first indication information is used to activate a configuration of not transmitting a first uplink channel in a first cell within a first time period, where the first uplink channel does not include a first CG PUSCH. The transceiver unit 1320 receives the first uplink information on a first CG PUSCH resource of the first cell.

For more detailed descriptions of the processing unit 1310 and the transceiver unit 1320, directly refer to related descriptions in the method embodiments shown in FIG. 4, FIG. 10, and FIG. 12. Details are not described herein again.

As shown in FIG. 14, a communication apparatus 1400 includes a processor 1410 and an interface circuit 1420. The processor 1410 and the interface circuit 1420 are coupled to each other. It can be understood that the interface circuit 1420 may be a transceiver or an input/output interface. Optionally, the communication apparatus 1400 may further include a memory 1430, configured to store instructions executed by the processor 1410, store input data required by the processor 1410 to run instructions, or store data generated after the processor 1410 runs instructions.

When the communication apparatus 1400 is configured to implement the method shown in FIG. 4, FIG. 10, or FIG. 12, the processor 1410 is configured to implement the functions of the processing unit 1310, and the interface circuit 1420 is configured to implement the functions of the transceiver unit 1320.

When the communication apparatus is a chip used in a terminal device, the terminal chip implements a function of the terminal device in the foregoing method embodiments. The terminal chip receives information from another module (for example, a radio frequency module or an antenna) in the terminal device, where the information is sent by a network device to the terminal; or the terminal chip sends information to another module (for example, a radio frequency module or an antenna) in the terminal device, where the information is sent by the terminal device to a network device.

When the communication apparatus is a module used in a network device, the module in the network device implements a function of the network device in the foregoing method embodiments. The module in the network device receives information from another module (for example, a radio frequency module or an antenna) in the network device, where the information is sent by a terminal to the network device; or the module in the network device sends information to another module (for example, a radio frequency module or an antenna) in the network device, where the information is sent by the network device to a terminal. The network device module herein may be a baseband chip of the network device, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

This application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiments. For example, the communication apparatus includes one processor and one memory. As shown in FIG. 14, the communication apparatus 1400 includes one processor 1410 and one memory 1430. The processor 1410 is coupled to the memory 1430. The memory 1430 stores instructions. When the instructions stored in the memory 1430 are executed by the processor 1410, the communication apparatus 1400 performs the method performed by the terminal device or the network device in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a network device or a terminal. Alternatively, the processor and the storage medium may exist in a network device or a terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, all or some of procedures or functions in embodiments of this application are executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A transmission method, comprising:
receiving first indication information, wherein the first indication information is used to activate a configuration of not transmitting a first uplink channel in a first cell within a first time period, wherein the first uplink channel comprises a first configured grant physical uplink shared channel CG PUSCH; and
sending first uplink information on a first CG PUSCH resource of the first cell, wherein the first CG PUSCH resource is within the first time period.

2. The method according to claim 1, wherein before the sending the first uplink information on the first CG PUSCH resource of the first cell, the method further comprises:
sending second uplink information on a second CG PUSCH resource of the first cell, wherein the second uplink information indicates a transmission state of the first CG PUSCH resource, and the transmission state of the first CG PUSCH resource is "transmit".

3. The method according to either of claims 1 and 2, wherein the first CG PUSCH resource belongs to a first CG period, the first CG period further comprises a third CG PUSCH resource, and the third CG PUSCH resource is not within the first time period.

4. The method according to any one of claims 1 to 3, wherein the method further comprises:
determining that the first CG PUSCH is not transmitted on a fourth CG PUSCH resource, wherein the fourth CG PUSCH resource belongs to a second CG period, and all CG PUSCH resources in the second CG period are within the first time period.

5. The method according to claim 4, wherein the method further comprises:
sending third uplink information on a fifth CG PUSCH resource of the first cell, wherein the third uplink information indicates a transmission state of the fourth CG PUSCH resource, and the transmission state of the fourth CG PUSCH resource is "not transmit".

6. The method according to any one of claims 1 to 3, wherein the first time period comprises a fourth CG PUSCH resource, the fourth CG PUSCH resource belongs to a second CG period, all CG PUSCH resources in the second CG period are within the first time period, and the method further comprises:
when determining third uplink information, determining the fourth CG PUSCH resource in the second CG period as an invalid resource.

7. The method according to any one of claims 1 to 6, wherein the first indication information is used to activate a cell discontinuous reception configuration, the cell discontinuous reception configuration comprises not transmitting the first uplink channel in the first cell within the first time period of a first cycle, and the first uplink channel comprises the first CG PUSCH.

8. A transmission method, comprising:
sending first indication information, wherein the first indication information is used to activate a configuration of not transmitting a first uplink channel in a first cell within a first time period, wherein the first uplink channel comprises a first configured grant physical uplink shared channel CG PUSCH; and
receiving first uplink information on a first CG PUSCH resource of the first cell, wherein the first CG PUSCH resource is within the first time period.

9. The method according to claim 8, wherein before the receiving the first uplink information on the first CG PUSCH resource, the method further comprises:
receiving second uplink information on a second CG PUSCH resource of the first cell, wherein the second uplink information indicates a transmission state of the first CG PUSCH resource, and the transmission state of the first CG PUSCH resource is "transmit".

10. The method according to either of claims 8 and 9, wherein the first CG PUSCH resource belongs to a first CG period, the first CG period further comprises a third CG PUSCH resource, and the third CG PUSCH resource is not within the first time period.

11. The method according to any one of claims 8 to 10, wherein the method further comprises:
receiving third uplink information on a fifth CG PUSCH resource of the first cell, wherein the third uplink information indicates a transmission state of a fourth CG PUSCH resource, the transmission state of the fourth CG PUSCH resource is "not transmit", the fourth CG PUSCH resource belongs to a second CG period, and all CG PUSCH resources in the second CG period are within the first time period.

12. The method according to any one of claims 8 to 11, wherein the first indication information is used to activate a cell discontinuous reception configuration, the cell discontinuous reception configuration comprises not transmitting the first uplink channel in the first cell within the first time period of a first cycle, and the first uplink channel comprises the first CG PUSCH.

13. A communication apparatus, comprising a unit or a module configured to perform the method according to any one of claims 1 to 7, or comprising a unit or a module configured to perform the method according to any one of claims 8 to 12.

14. A communication apparatus, comprising one or more processors configured to perform the method according to any one of claims 1 to 7 or perform the method according to any one of claims 8 to 12.

15. A computer-readable storage medium, wherein the computer-readable storage medium stores a computer program or instructions, and when the computer program or the instructions are executed by a communication apparatus, the method according to any one of claims 1 to 7 or the method according to any one of claims 8 to 12 is implemented.

16. A chip system, comprising: a memory, configured to store a computer program; and a processor, wherein after the processor invokes the computer program from the memory and runs the computer program, a communication apparatus in which the chip system is installed is caused to perform the method according to any one of claims 1 to 7 or the method according to any one of claims 8 to 12.

17. A computer program product, wherein when the computer program product is invoked by a computer, the computer is caused to perform the method according to any one of claims 1 to 7 or perform the method according to any one of claims 8 to 12.
